Europäisches Patentamt

**European Patent Office**

**Office européen des brevets**

(11) Numéro de publication: **0 139 071**
**A2**

## DEMANDE DE BREVET EUROPEEN

(21) Numéro de dépôt: **84101979.7**

(22) Date de dépôt: **26.01.82**

(51) Int. Cl.⁴: **C 04 B 35/60**
**C 09 K 3/14**

(30) Priorité: **30.01.81 FR 8102179**

(43) Date de publication de la demande:
**02.05.85 Bulletin 85/18**

(84) Etats contractants désignés:
**AT BE CH DE GB IT LI NL SE**

(60) Numéro de publication de la demande initiale
en application de l'article 76 CBE: **0 057 651**

(71) Demandeur: **Société Française d'Electrométallurgie-SOFREM**
**10, rue du Général Foy**
**F-75008 Paris(FR)**

(72) Inventeur: **Septier, Louis**
**Le Beau Site 42, Avenue Ravanel Le Rouge**
**F-74400 Chamonix(FR)**

(72) Inventeur: **Demange, Michel**
**530, Chemin de la Combe Passy**
**F-74190 Le Fayet(FR)**

(74) Mandataire: **Pascaud, Claude et al,**
**PECHINEY 28, rue de Bonnel**
**F-69433 Lyon Cedex 3(FR)**

(54) **Dispositif de solidification et de refroidissement rapides par coulée continue de produits fondus à base d'oxydes métalliques.**

(57) L'invention concerne un dispositif de solidification et de refroidissement rapides, par coulée continue, de produits fondus à base d'oxydes métalliques.

Ce dispositif comprend essentiellement une alimentation contrôlable en produit fondu, deux cylindres métalliques d'axes parallèles et sensiblement horizontaux, tournant en sens inverse, aminés d'une vitesse périphérique sensiblement égale, dont les axes sont écartés d'une distance égale à la somme des rayons de chaque cylindre augmentée d'au moins un millimètre, au moins un moyen de refroidissement et un moyen de mise en rotation synchrone, en sens opposé et à une vitesse réglable desdits cylindres et un moyen de récupération du produit solidifié.

Il s'applique, en particulier, à l'obtention d'abrasifs à cristallisation fine à base de corindon ou de corindon-zircone.

FIG.1

DISPOSITIF DE SOLIDIFICATION ET DE REFROIDISSEMENT RAPIDES
PAR COULEE CONTINUE DE PRODUITS FONDUS A BASE D'OXYDES METALLIQUES

La présente invention concerne un dispositif de solidification et de refroidissement rapides par coulée continue, de produits fondus à base d'oxydes métalliques.

Dans de nombreux processus industriels, on cherche à obtenir une solidification et un refroidissement rapides de produits fondus à base d'oxydes métalliques, soit pour des raisons de sécurité ou de commodité : par exemple, lorsqu'on veut rapidement évacuer, vers le crassier, les laitiers ou scories épuisées provenant d'opérations électrométallurgiques sans prendre le risque de les transporter à l'état liquide ou partiellement solidifiées, soit pour des raisons structurales, lorsque le refroidissement rapide est nécessaire pour conférer au produit certaines caractéristiques physiques. Par exemple, il est connu que les produits abrasifs à base de corindon et à base de corindon et de zircone ont des propriétés mécaniques d'autant meilleures qu'ils ont été obtenus par un refroidissement plus rapide du produit élaboré par fusion au four électrique. Ce fait a été signalé, notamment, dans le brevet français 1 332 975 de CARBORUNDUM Company -qui préconise la coulée dans un moule en graphite-, dans le brevet français 2 127 231 de PECHINEY (coulée du produit fondu sur des boulets en acier), dans le brevet français 2 133 595 de TREIBACHER CHEMISCHE WERKE AG (coulée sur des billes de fer), dans le brevet français 2 166 082 de NORTON (coulée entre des plaques métalliques massives écartées de 1,6 à 12,7 mm).

Pour des raisons évidentes, il serait souhaitable que le refroidissement rapide soit effectué de façon continue. En effet, dans le cas des scories et laitiers, le refroidissement en lingotières, habituellement pratiqué, est très lent et il nécessite une multiplicité de lingotières qui encombrent les ateliers. Dans le cas des abrasifs à cristallisation fine, la coulée entre plaques métalliques rapprochées ou sur boulets en acier conduit à une productivité très faible.

On a déjà décrit antérieurement un certain nombre de procédé de refroidissement rapide par coulée continue.

Le brevet français 1 319 102 de NORTON décrit la coulée d'alumine électrofondue, en couche mince, sur un cylindre creux, refroidi par aspersion d'eau sur sa face interne.

Le brevet américain US 3 993 119 (FR 2 290 266) de NORTON décrit un dispositif de coulée entre des plaques métalliques épaisses, fixées, par leur base sur un convoyeur sans fin qui passe sur des rouleaux provoquant l'écartement des plaques et la séparation des blocs d'abrasif refroidi qui tombent dans un dispositif de réception.

Le brevet français FR 2 422 462 de NORTON décrit un autre dispositif de coulée continue entre bandes métalliques refroidies et maintenues en contact avec l'abrasif en cours de solidification par une série de rouleaux de guidage.

Ces différents appareillages sont mécaniquement complexes et sont mal adaptés à une production continue, massive, et à bas prix, d'abrasifs électrofondus à cristallation fine.

La présente invention est basée sur l'utilisation, comme organe de refroidissement des produits électrofondus, de deux cylindres refroidis, horizontaux et d'axes parallèles.

Le procédé de solidification et de refroidissement rapides par coulée continue de produits fondus à base d'oxydes métalliques, objet de la demande de brevet européen EP 57 651 A2, consiste :
- à introduire le produit-fondu dans l'espace convergent formé par deux cylindres horizontaux, tournant en sens inverse, animés d'une vitesse périphérique sensiblement égale, et dont les axes sont écartés d'une distance égale à la somme des rayons de chaque cylindre augmentée d'au moins un millimètre,
- à refroidir la paroi des cylindres,
- à régler la vitesse de rotation des cylindres de façon telle que la solidification totale du produit fondu ne se produise qu'au-delà du plan passant par les axes de rotation des cylindres,
- et à récupérer le produit solidifié dans l'espace divergent formé entre les cylindres.

Le dispositif, objet de la présente invention, comprend essentiellement une alimentation contrôlable en produit fondu, deux cylindres métalliques d'axes parallèles et sensiblement horizontaux, tournant en sens inverse, animés d'une vitesse périphérique sensiblement égale, dont les axes sont écartés d'une distance égale à la somme des rayons de chaque cylindre augmentée d'au moins un millimètre, au moins un moyen de refroidissement et un moyen de mise en rotation synchrone, en sens opposé et à une vitesse réglable desdits cylindres et un moyen de récupération du produit solidifié, et un moyen de récupération du produit solidifé dans l'espace divergent entre les cylindres.

La figure 1 représente, en coupe verticale, le dispositif objet de l'invention.

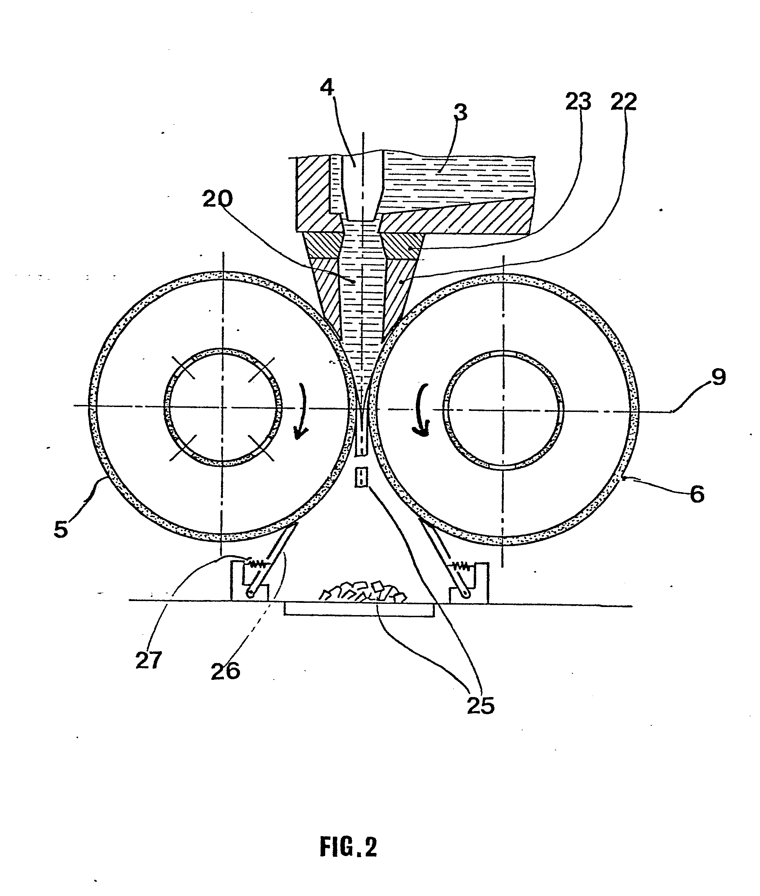

La figure 2 représente ce même dispositif, avec une variante de l'alimentation en produit fondu.

La figure 3 représente le détail du processus de solidification.

Les figures 4, 5 et 6 représentent des moyens de réaliser l'étanchéité à l'extrémité des cylindres.

Les figures 7a, 7b, 7c et 7d représentent quatre dispositions possibles des cylindres.

Le produit fondu à solidifier peut provenir directement du four de fusion (1), ou d'un moyen de stockage, tel qu'une poche, dont seule la partie inférieure a été représentée.

A la partie inférieure du four (1), on dispose un orifice de coulée (2) obturable par tout moyen connu, réalisé, de préférence, en graphite ou, éventuellement, en matériau réfractaire.

Le produit fondu (3) s'écoule par l'orifice (2) en manoeuvrant le tampon d'obturation (4).

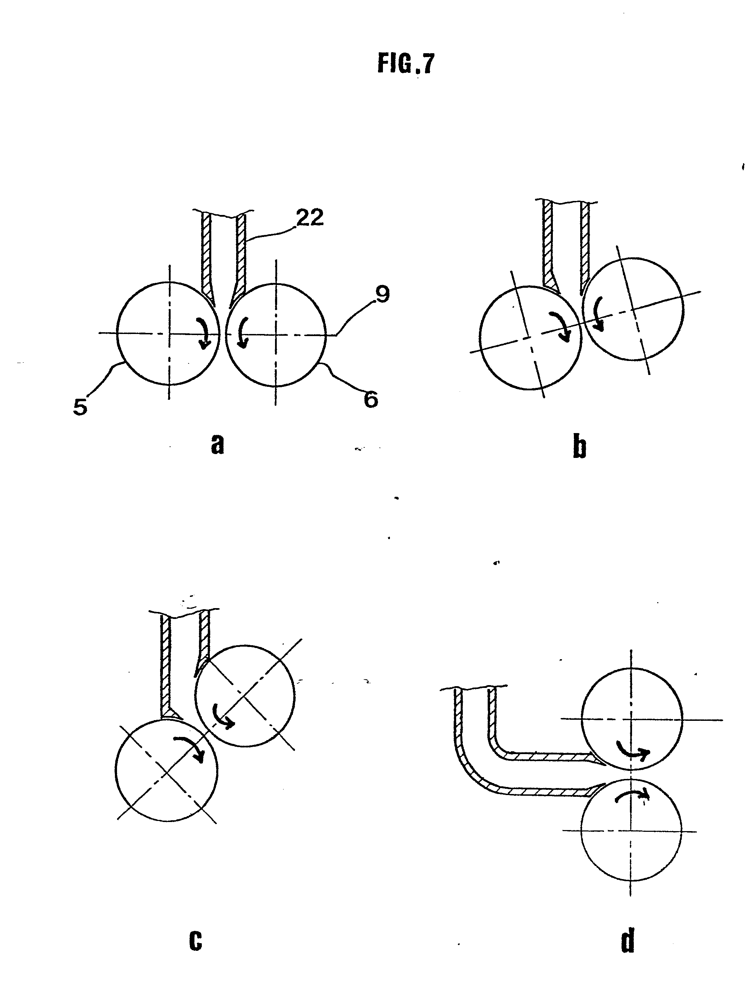

Le dispositif de refroidissement rapide et continu comporte deux cylindres (5) et (6) dont les axes respectifs (7) et (8) sont parallèles et sensiblement horizontaux. Le plan (9) passant par les axes (7) et (8) est horizontal, dans le cas représenté, mais cette disposition n'est pas obligatoire, comme on peut le voir sur la figure 7. Les cylindres sont disposés

0139071

de façon à laisser entre eux, au point le plus rapproché, c'est-à-dire dans le plan (9) de leurs axes, un espace au moins égal à un millimètre. Cette distance peut être augmentée, selon le type de produit coulée, jusqu'à 10 à 20 mm, par exemple, sans que cela constitue une limite absolue de l'invention.

Les deux cylindres sont mis en rotation synchrone, et en sens opposé selon le sens des flèches, par un dispositif moteur et une chaîne cinématique de tout type connu permettant de faire varier la vitesse de rotation. L'un des cylindres peut être monté sur des paliers élastiques.

Les deux cylindres déterminent ainsi entre eux un espace convergent (10) dans lequel est introduit le produit à refroidir, et un espace divergent (11) dans lequel on récupère le produit solidifié.

Les deux cylindres (5) et (6) sont réalisés en un métal bon conducteur de la chaleur et ils doivent être mécaniquement résistants. On peut utiliser de l'acier, du cuivre pur ou, de préférence allié, pour augmenter sa dureté par des additions connues telles que fer, cadmium, chrome ou encore de l'acier cuivré ou du cuivre recouvert d'une frette en acier. Les cylindres peuvent être pleins et, dans ce cas, le refroidissement ne peut être assuré que par aspersion ou arrosage externe avec de l'eau en évitant tout contact entre l'eau et le produit fondu, ou, de préférence, creux, et comporter un refroidissement interne, et, optionnellement, un refroidissement externe.

La partie interne de chaque cylindre constitue une chambre (12) et (13) à circulation d'eau ou d'un fluide de refroidissement, introduit et évacué par une pluralité d'orifices (14), de façon à assurer un refroidissement efficace et homogène des parois (15).

Les deux extrémités de l'espace convergent (10) dans lequel est introduit le produit à solidifier doivent être obturées. Cette obturation peut être effectuée en prévoyant, aux deux extrémités des cylindres, une zone (16) de diamètre supérieur qui vient en contact avec le cylindre antagoniste, mais cette disposition fixe de façon définitive l'écartement des cylindres, ce qui peut être inacceptable. Un autre mode d'obturation (figure 5) consiste à munir les extrémités opposées de chaque cylindre d'un disque (13) de diamètre suffisant pour assurer, par simple frottement, l'étanchéité recherchée.

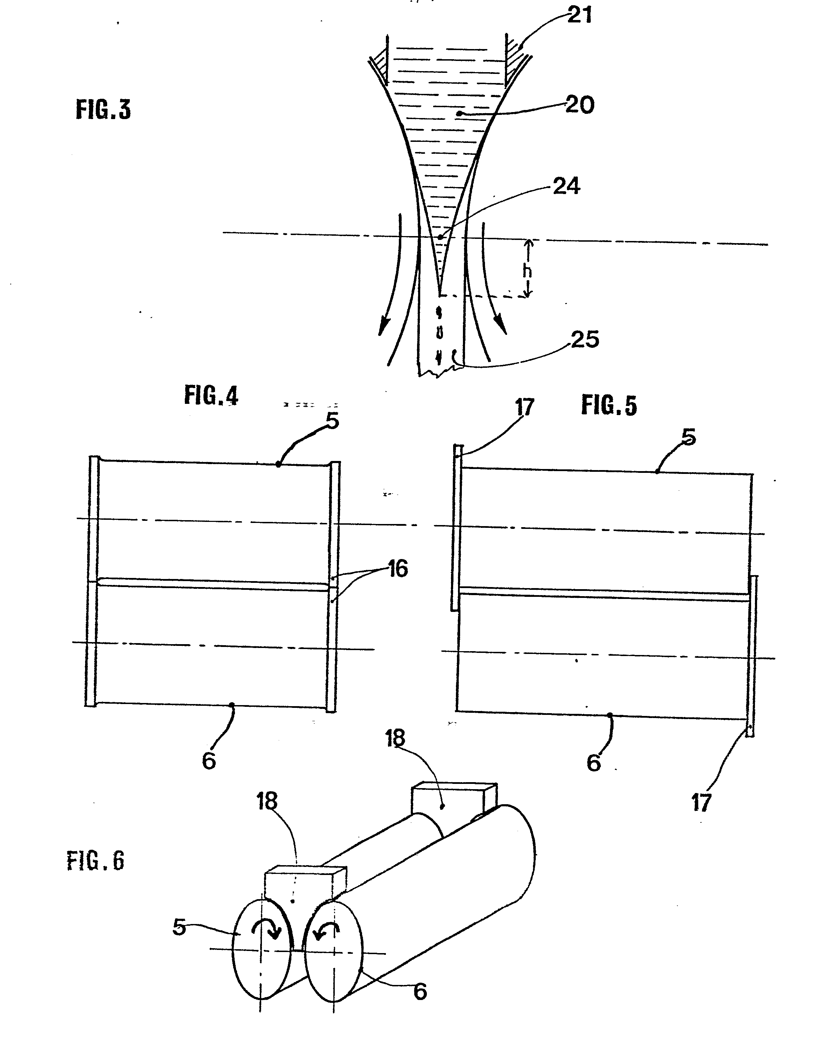

La figure 6 représente un autre moyen consistant en deux pièces d'obturation (18), fixes, réalisées de préférence en graphite ou en matériau réfractaire compact ou fibreux.

La figure 7 montre différentes dispositions possibles des cylindres : plan des axes horizontal (a), plan des axes légèrement incliné (b), incliné à environ 45° (c) et sensiblement vertical (d). Dans les cas (a) et (b), le produit fondu peut être simplement coulé dans l'espace convergent entre les cylindres. Dans les (c) et (d), il est nécessaire de l'introduire au moyen d'une busette (14) qui vient en appui étanche sur les parois des cylindres.

Dans les différents cas, les cylindres sont, en principe, de même diamètre. Leur rotation étant synchrone, on assure ainsi une vitesse périphérique égale. Si cette vitesse était différente pour chque cylindre, il y aurait frottement du moins rapide contre le produit solide et une usure excessive. Il serait également possible que les deux cylindres soient de diamètres inégaux et que la vitesse de rotation soit réglée individuellement pour assurer une vitesse périphérique égale, mais il n'apparaît pas que cette disposition présente des avantages particuliers.

Le diamètre des cylindres et leur longueur peuvent être choisis dans les limites relativement larges et ne constituent pas une limitation de l'invention. Le diamètre peut aller de une ou quelques dizaines de centimètres à un mètre et au-delà, et la longueur peut atteindre et même dépasser un mètre. Souvent, ce seront les possibilités de réalisation et d'usinage (rectification de la surface) qui en fixeront les limites supérieures. Cependant, de façon générale, des cylindres de grand diamètre se prêtent mieux à un réglage précis de la hauteur du produit fondu (20) dans l'espace convergent (10).

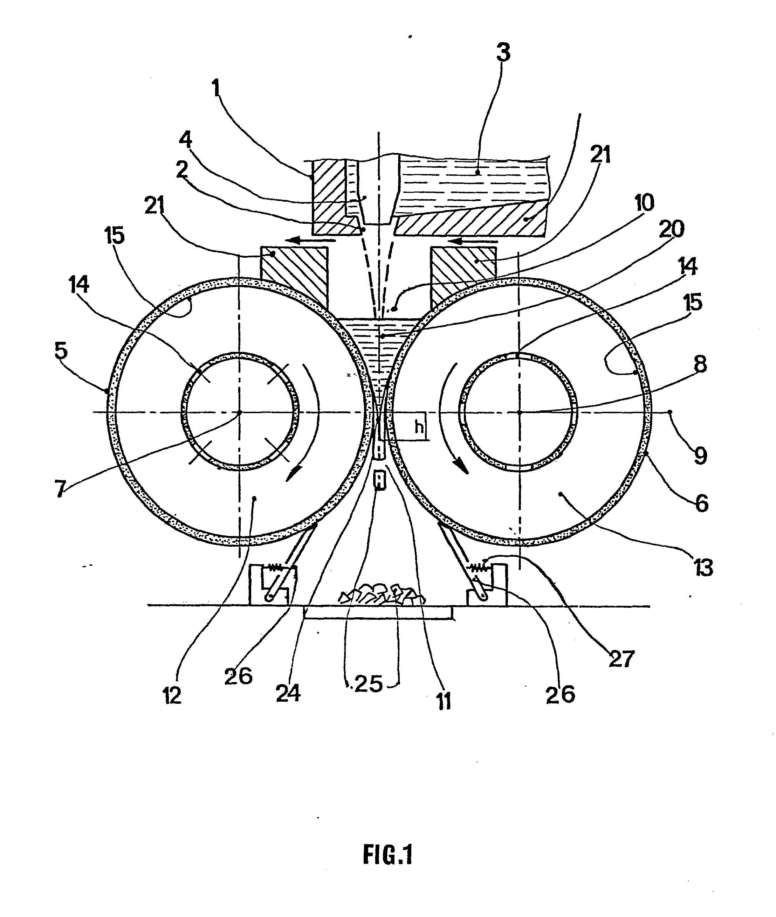

Sur la figure 1, l'alimentation du produit liquide est effectuée par simple écoulement. On règle la vitesse d'écoulement de façon à maintenir une hauteur sensiblement constante du produit liquide (20) dans l'espace convergent (10). Deux barrières latérales (21) limitent le risque d'avoir une trop grande surface de contact entre la paroi des cylindres et le produit liquide dans le cas où son niveau s'élèverait exagérément. Il en résulterait une solidification prématurée du produit qui bloquerait le fonctionnement de l'appareil.

Dans le cas où le produit doit être solidifié à l'abri de l'air, comme par exemple, les abrasifs électrofondus à base de corindon ou de corindon-zircone, une circulation de gaz inerte ou réducteur peut être assurée dans l'espace convergent (10). Elle est symbolisée par les deux flèches.

Un autre moyen de coulée du produit fondu, qui évite son contact avec l'atmosphère, consiste à utiliser une busette (22) qui vient en appui, à frottement doux et étanche, sur les parois du cylindre. Elle est réalisée, de préférence, en graphite. La partie supérieure (23) peut être réalisée en un matériau souple ou élastique.

Le fonctionnement du dispositif s'opère de la façon suivante : la vitesse commune des cylindres et le débit d'eau de refroidissement sont réglés de telle manière qu'un film liquide (24) existe encore au niveau du plan commun des axes de rotation. Ce film doit avoir une épaisseur suffisante pour permettre une déformation des parois déjà solidifiées et pas trop grande pour éviter que le liquide ne "fuie" par le bas. Ce film se prolonge au-dessous du plan des axes d'une hauteur "h" qui ne doit pas être inférieure à environ un centimètre. Lors du démarrage de l'appareil, surtout si l'écartement des rouleaux est important, il peut être avantageux d'obturer l'intervalle entre les rouleaux par un moyen tel que de la tresse d'amiante, qui s'éliminera dès le début de la rotation.

Au contact de la surface froide des cylindres, la matière se solidifie partiellement et est entraînée vers le bas par la rotation des cylindres. Un point très important de l'invention est le réglage de la vitesse de rotation des cylindres en fonction de la puissance de refroidissement de l'appareil de manière que, dans la zone de distance minimale entre les cylindres (zone limitée par les deux génératrices des cylindres situées dans le plan horizontal des axes de rotation), une partie du produit soit encore à l'état liquide. Ce liquide forme ainsi un film dans cette zone médiane. Ce film permet aux deux couches solides de se rapprocher l'une de l'autre et de passer entre les cylindres. Ce ne serait pas le cas si la solidification était achevée au moment où la matière atteint la zone de distance minimale entre les cylindres, le produit solide obtenu n'étant, en règle générale, que peu ou pas malléable.

Le produit solidifié est récupéré dans l'espace divergent (11) entre les cylindres. Selon sa nature, il se fragmente spontanément en blocs de dimensions variables, ou peut rester à l'état de plaques. Le produit solidifié (25) peut être récupéré par tout moyen classique : bac de réception, convoyeur à bandes, ou tomber directement dans un concasseur ou un broyeur.

Accessoirement, deux racleurs (26), maintenus en appui par des moyens élastiques (27) peuvent assurer l'élimination des traces de produit solidifié qui seraient restées adhérentes sur la paroi externe des cylindres.

L'appareillage peut, enfin, comporter un moyen de refroidissement accéléré du produit solidifié par arrosage ou pulvérisation d'eau, et un moyen de refroidissement supplémentaire des cylindres, par arrosage de la paroi externe, suivi d'un moyen de séchage qui garantisse que ladite paroi soit parfaitement débarrassée de toute trace d'eau à son arrivée dans la zone de coulée.

EXEMPLES D'APPLICATION

On a réalisé une première version de l'appareil, objet de l'invention, comportant deux cylindres creux en cuivre, de 126 mm de diamètre et de 300 mm de longueur, disposés de telle manière que leurs axes soient parallèles, dans un plan horizontal et situés à 130 mm de distance.

Avec cet appareil réglé à une vitesse de rotation de 4,5 tours par minute, et un débit d'eau de 40 litres par minute dans chaque cylindre, nous avons pu solidifier environ 6 kg par minute de corindon-zircone à 20 % de $ZrO_2$ et 68 % d'$Al_2O_3$. Le produit, à la sortie des cylindres, se fragmente spontanément en morceaux polygonaux de 3 à 15 mm d'arête sur une épaisseur de 4 mm. Certains morceaux se brisent suivant le plan médian (retassure). Le travail de concassage est ainsi très bien préparé.

Dans une autre réalisation de l'invention, on a disposé deux cylindres en acier de 350 mm de diamètre et de 1000 mm de longueur. Leurs axes parallèles et contenus dans un même plan horizontal sont situés à 354 mm de distance. Ils sont animés en rotation à la vitesse de 3,5 tours par minute.

Les cylindres sont munis, à une de leur extrémité, d'une joue de 450 mm de diamètre, en acier également. Les cylindres sont placés tête-bêche de telle sorte que ces joues viennent limiter, latéralement, l'espace libre entre les cylindres. Chaque cylindre est refroidi par une circulation de 200 litres d'eau froide par minute.

Cet appareil a permis de solidifier en plaques minces 42 kg par minute de corindon-zircone à 25 % de $ZrO_2$ et 75 % d'alumine.

Une troisième réalisation comporte deux cylindres en cuivre de 1000 mm de long et 346 mm de diamètre extérieur chemisés, par frettage à chaud, avec deux manchons en acier dur trempé de 2 mm d'épaisseur et de 350 mm de diamètre extérieur. Les cylindres en cuivre sont raidis intérieurement par des ailettes en cuivre disposées suivant des plans diamétraux.

Ces ailettes favorisent, de plus, les échanges thermiques entre le métal du cylindre et l'eau de refroidissement. Les cylindres sont munis de joues en acier de 450 mm de diamètre selon la figure 5.

Les axes horizontaux et parallèles de ces cylindres sont contenus dans un plan oblique incliné à 25° sur le plan horizontal et situés à 355 mm de distance.

Cette disposition permet une amélioration de l'alimentation en corindon-zircone liquide de la machine. Avec une vitesse de rotation des cylindres de 3 tours par minute et une alimentation en eau de refroidissement de 220 litres par minute et par cylindre, on a pu solidifier en continu du corindon-zircone à 25 % de $ZrO_2$ au rythme de 48 kg/minute.

L'invention s'applique plus particulièrement à la solidification et au refroidissement rapides, par coulée continue, de produits fondus non métalliques, à base d'oxydes métalliques, dont le point de fusion peut atteindre jusqu'à 2000° C. C'est le cas du corindon blanc (alumine pure électrofondue), des corindons noirs (alumine électrofondue contenant quelques pour cent d'impuretés, telles qu'oxydes de fer, de titane, de silicium), de corindon-zircone, des scories et laitiers métallurgiques, à base de chaux, silice, magnésie, alumine et d'oxydes métalliques divers dont les points de fusion se situent entre 1000° et 20000° C et des abrasifs spéciaux à base d'alumine et d'oxycarbures d'aluminium.

REVENDICATIONS

1°/ Appareillage pour la solidification et le refroidissement rapides, par coulée continue, de produits fondus à base d'oxydes métalliques, caractérisé en ce qu'il comporte :
- un moyen d'alimentation contrôlable en produit fondu,
- deux cylindres métalliques d'axes parallèles et sensiblement horizontaux,
- un moyen de mise en rotation synchrone desdits cylindres à vitesse périphérique sensiblement égale, et en sens opposé,
- un moyen de réglage de la vitesse de rotation desdits cylindres,
- un moyen de récupération du produit solidifié.

2°/ Appareillage selon revendication 1, caractérisé en ce qu'il comporte un moyen de refroidissement accéléré du produit solidifié.

3°/ Appareillage selon revendications 1 ou 2, caractérisé en ce qu'il comporte un moyen de refroidissement de la paroi interne des cylindres qui sont creux.

4°/ Appareillage selon l'une quelconque des revendications 1 à 3, caractérisé en ce qu'il comporte un moyen de refroidissement de la paroi externe des cylindres.

5°/ Appareillage selon revendication 4, caractérisé en ce qu'il comporte un refroidissement de la paroi externe par projection d'eau et un moyen pour éliminer toute trace d'eau de la paroi externe avant qu'elle ne revienne au contact du produit fondu.

6°/ Appareillage selon l'une quelconque des revendications 1 à 5, caractérisé en ce qu'il comporte des moyens de raclage de la paroi externe des cylindres disposés dans l'espace divergent entre les rouleaux.

7°/ Appareillage selon l'une quelconque des revendications 1 à 6, caractérisé en ce qu'il comporte des moyens d'étanchéité disposés aux deux extrémités des cylindres.

8°/ Appareillage selon l'une quelconque des revendications 1 à 7, caractérisé en ce qu'il comporte des moyens de circulation de gaz inerte ou réducteur, dans l'espace convergent entre les cylindres.

9°/ Appareillage selon l'une quelconque des revendications 1 à 8, caractérisé en ce qu'il comporte des moyens d'étanchéité de l'espace convergent entre les cylindres.

10°/ Appareillage selon l'une quelconque des revendications 1 à 9, caractérisé en ce qu'il comporte des moyens de concassage du produit solidifié.

11°/ Appareillage selon l'une quelconque des revendications 1 à 10, caractérisé en ce que le plan contenant les axes de rotation des cylindres est sensiblement horizontal.

12°/ Appareillage selon l'une quelconque des revendications 1 à 10, caractérisé en ce que le plan contenant des axes de rotation des cylindres est incliné sur l'horizontale d'un angle inférieur à 45°.

13°/ Appareillage selon l'une quelconque des revendications 1 à 10, caractérisé en ce que le plan contenant des axes de rotation des cylindres est incliné sur l'horizontale d'un angle compris entre 45 et 90°.

14°/ Appareillage selon l'une quelconque des revendications 12 ou 12, caractérisé en ce que le produit liquide est introduit dans l'espace convergent entre les cylindres au moyen d'une busette venant en appui de façon sensiblement étanche sur la paroi des cylindres.

15°/ Appareillage selon l'une quelconque des revendications 1 à 14, caractérisé en ce que l'un au moins des cylindres est monté sur des paliers élastiques.

FIG.1

FIG.2

0139071

FIG.3

3-4

21
20
24
h
25

FIG.4

5
16
6

17 FIG.5

5
16
6
17

18

FIG.6

18
5
6

## FIG.7

a

b

c

d